# EUROPEAN PATENT SPECIFICATION

(11) **EP 0 728 959 B1**
(45) Date of publication and mention of the grant of the patent: **19.01.2000**
(21) Application number: 95308062.9
(22) Date of filing: 10.11.1995
(51) Int. Cl.: F16F 13/14, F16F 1/387

(54) **Vibration-damping link**
Schwingungsdämpfender Verbundstab
Bâton de connection pour amortissement de vibrations

(30) Priority: 23.02.1995 GB 9503631
(43) Date of publication of application: 28.08.1996
(73) Proprietor: DRAFTEX INDUSTRIES LIMITED, Edinburgh EH2 3AP, Scotland (GB)
(72) Inventor: Chauvet, Ludovic, F-44470 Mauves-sur-Loire (FR); Fort, Patrice, F-44470 Thouare-sur-Loire (FR); Vassiliadis, Serge, F-44590 Derval (FR)
(74) Representative: Foster, David Martyn

(56) References cited:
- EP-A- 0 042 273
- EP-A- 0 409 579
- DE-A- 3 122 311
- DE-A- 3 822 421
- US-A- 2 019 052

## Description

The invention relates to a vibration-damping link for interconnecting two relatively movable bodies, comprising two spaced-apart attachment means for respective attachment to the two bodies, relatively rigid restraining means for limiting the possible movement apart of the attachment means, and elastic means to provide damping of relative movement between the attachment means.

Such a link may be used as part of the support system for supporting the engine of the vehicle from the body in a manner which damps vibrations of the engine and minimises their transmission to the body.

Moreover, such a link is known from DE-A-3 122 311 for use in vibration-damping in motor vehicles.

The invention aims to provide a vibration-damping link which provides better control of vibration damping and is of more compact form.

According to the invention, therefore, the known form of vibration-damping link is characterised by said elastic means extending from one of the two attachment means to the other and interconnecting the two attachment means, by a free space defined by the elastic means and between the attachment means, and by limiting means in the free space for limiting movement of the attachment means towards each other.

Vibration-damping links embodying the invention will now be described, by way of example only, with reference to the accompanying diagrammatic drawings in which:
Figure 1 is a plan view of one of the links;
Figure 2 is a section on the line II-II of Figure 1;
Figure 3 is a perspective view of the underside of the link of Figure 1;
Figure 4 is a graph for explaining the operation of the link of Figures 1,2 and 3;
Figure 5 is a plan elevation of another of the links;
Figure 6 shows detail of part of the link of Figure 5;
Figure 7 is a view corresponding to Figure 5 and showing a modified form of the link of that Figure; and
Figure 8 is a view corresponding to Figure 7 and showing a modified form of the link of that Figure.

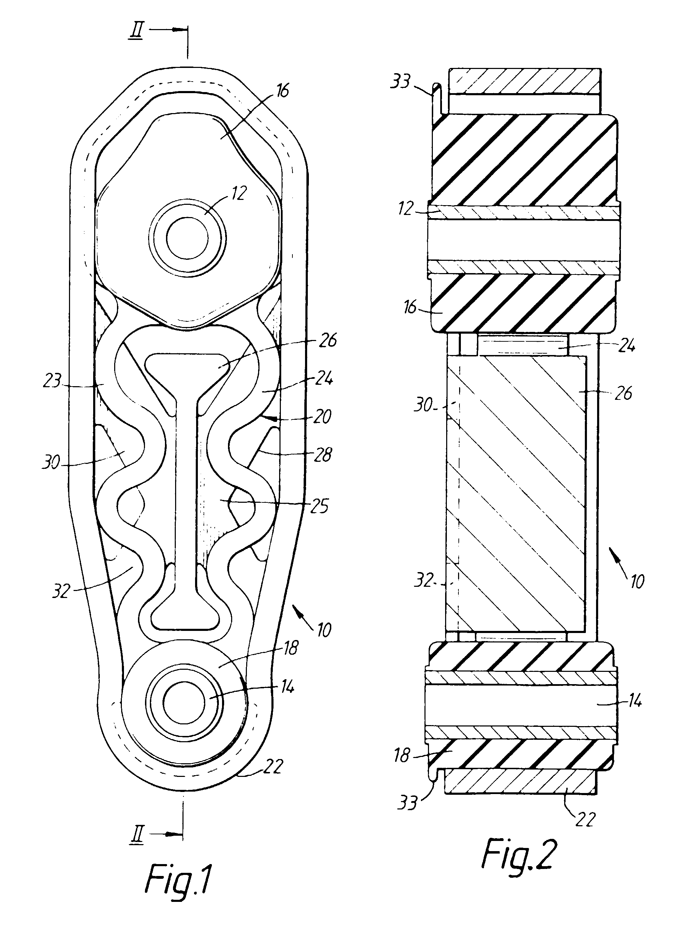

The link 10 shown in Figures 1 and 2 is for interconnection between two relatively movable bodies, such as the engine of a motor vehicle and the vehicle body. For example, the link 10 may be used to support the engine in a pendular fashion. The link comprises two rigid metal tubes 12,14. Strong metal pins connected to the engine and body pass through these tubes in use so that the link is connected between them in a supportive manner and is subjected to vibratory and other movement of the engine relative to the vehicle body.

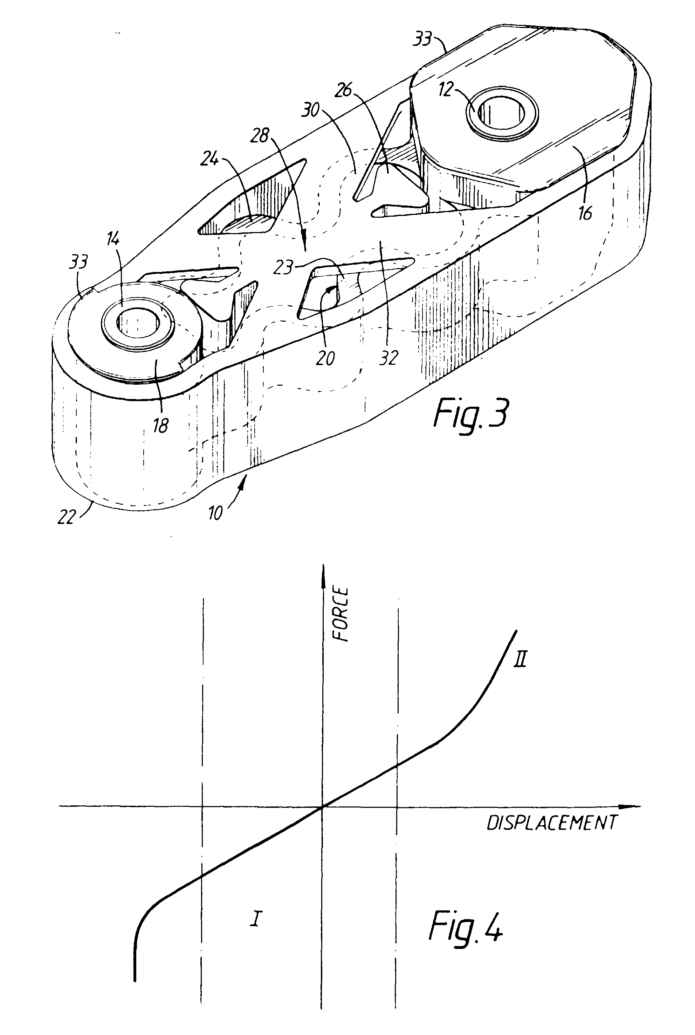

Each of the tubes 12,14 is embedded in a respective bushing 16,18 of an elastic element 20 which extends between the two ends of the link. The elastic element may be made of stiff rubber, for example. The element 20 is confined within a band 22 of metal or plastic or other suitable material. The enlarged ends 16,18 of the element 20 are connected by integral flexible walls 23 and 24 having a free space 25 between them which is positioned a rigid element 26. The element 26 is supported by a cross-over frame 28 which is integrally connected to the band 22 (see Figure 3) and comprises cross-over arms 30 and 32. The arms 30 and 32 support the element 26 suspended within the free space 25.

In use, the rigid band 22 resists tensile forces acting through the elastic element 20 between the tubes 12 and 14 - that is, forces caused by vibration of the engine and tending to move the tubes 12,14 apart. Compressive forces acting on the element 20, tending to move the bushings 16,18 towards each other, are limited by eventual abutment between the bushings 16,18 and the respective ends of the rigid element 26.

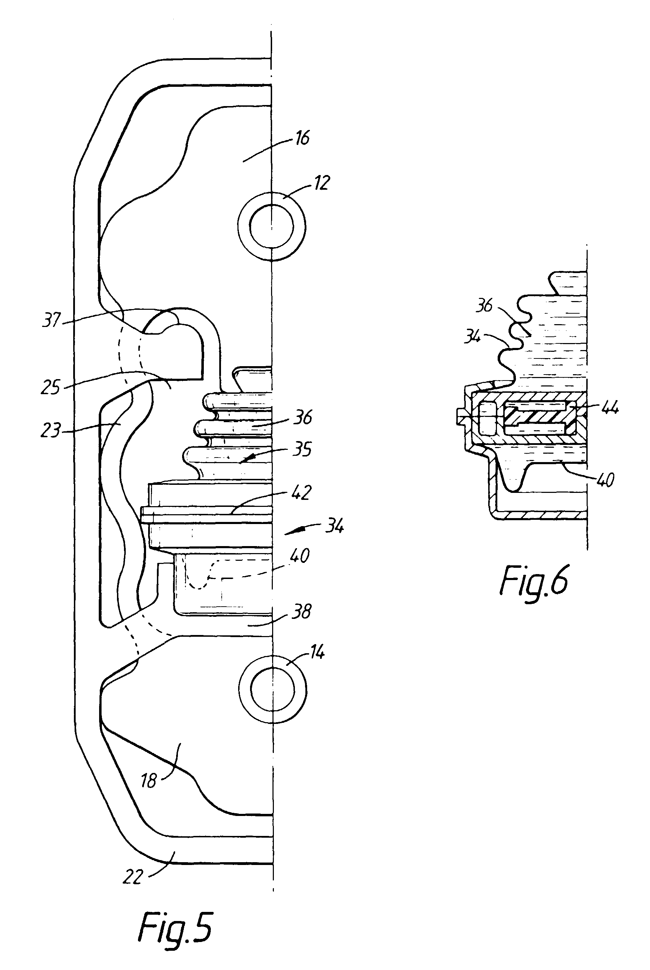

At low amplitudes of vibration (when the engine is stopped or running very slowly, for example) the link 10 has relatively low stiffness, the stiffness being constituted almost entirely by the stiffness of the elastic element 20. In other words, the link operates in region I of the curve shown in Figure 4, in which displacement is plotted along the horizontal axis and resistive force along the vertical axis.

However, as the amplitude of the vibrations of the engine increase, the stiffness of the link will be increased because the effect of the elastic member 20, in resisting vibrations, will be augmented by the effects of the metal band 22 and the stiff central element 26. The link is now operating within the region II of the curve shown in Figure 4.

As shown in Figure 2, the elastic element 20 is provided at each of its ends with a lip 33 which secures it within the band 22.

In the link 34 shown in Figures 5 and 6, parts corresponding to those in Figures 1,2 and 3 are similarly referenced.

The link 34 of Figures 5 and 6 differs from the link of Figures 1,2 and 3 in that the stiff central element 26 of the link 10 is replaced, in the link 34, by a damping unit 35. The damping unit is of the hydroelastic type and comprises an elastic walled chamber 36 which is in abutment with the lower end of the bushing 16. The chamber 36 is supported in a stiff frame 38 which is integral with the band 22. The frame 38 carries a subsidiary elastic walled chamber 40 which is in hydraulic communication with the chamber 36 through a control unit 42 which incorporates a channel connecting the chambers 36 and 40 via a restricted passageway, the characteristics of the channel and the restricted passageway being designed to produce required damping characteristics. As shown in the more detailed view of Figure 6, the control unit 42 may incorporate an elastomeric membrane 44.

The elastic walled chambers 36 and 40 may be produced by blow-moulding from a thermoplastic elastomer.

In operation, damping at low amplitudes of vibration is provided almost entirely by the elastic element 20 (as in the link of Figures 1,2 and 3) and the stiffness is relatively low. As the vibrations increase, however, additional damping is provided by the hydroelastic damping unit 35. Initially, the damping unit 35 absorbs such vibrations by oscillation of the membrane 44. As the vibrations continue to increase, however, fluid is forced between chambers 36 and 40 via the restricted passageway mentioned above, thus providing further damping. Vibration of the bushing 16 is limited by the stop 37. It will be noted that the damping unit 35 acts between the bushing 16 and the stiff frame 38 in the link of Figure 5.

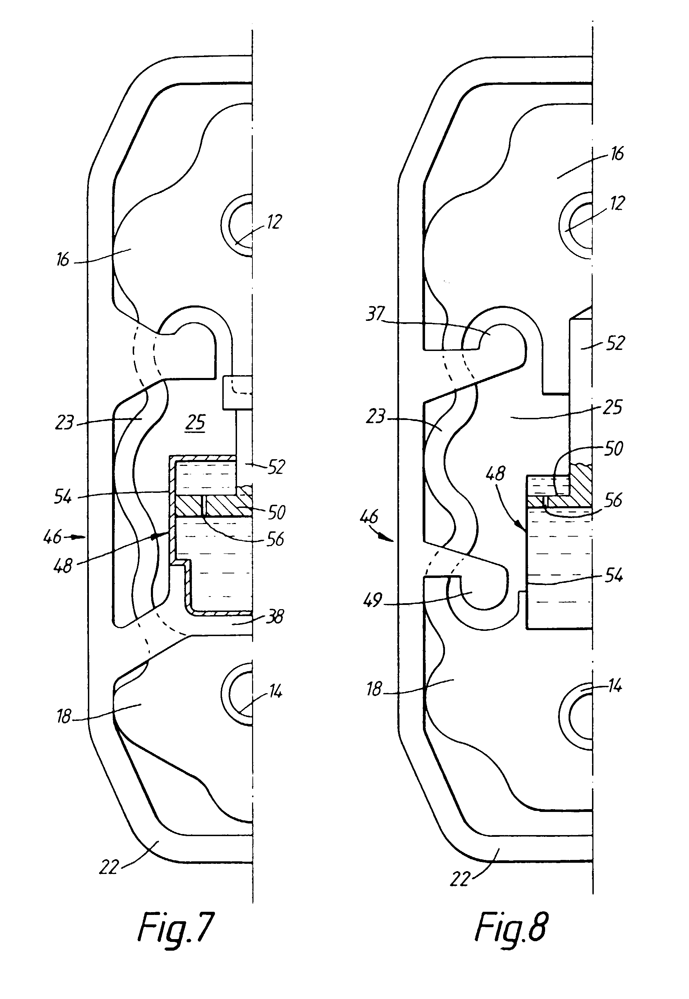

Figure 7 shows a modified arrangement of the link of Figures 5 and 6 and, again, parts in Figure 7 corresponding to those in the other Figures are similarly referenced.

The link 46 of Figure 7 differs from the link 34 of Figures 5 and 6 in that the hydroelastic damping unit 35 of Figures 5 and 6 is replaced by a hydraulic damping element 48. As shown, this comprises a piston 50 connected via a piston rod 52 to the bushing 16, the piston sealingly sliding in a cylinder 54 which is mounted on the rigid frame 38. The cylinder is filled with hydraulic fluid, and the piston has one or more through passageways 56 enabling the fluid to pass from one side of the piston to the other as it moves within the cylinder, the amount of damping produced being dependent on the cross-sectional size of the passageways 56.

Again, the operation is generally as already described. At low levels of vibration, damping is provided almost entirely by the elastic element 20 with relatively low stiffness. As the vibration amplitude increases, however, additional damping is provided by the hydraulic damper 48. Again, the hydraulic damper 48 acts between the bushing 16 and the stiff frame 38.

Figure 8 shows a modification to the link of Figure 7. In the link of Figure 8, the hydraulic damper 48 does not act between the bushing 16 and the stiff frame 38 of Figure 7 but instead acts between the two bushings 16,18. Such an arrangement gives modified characteristics to the link. In the link of Figure 8, the damping effect of the hydraulic damper 48 does not come into operation until one or other of the bushings 16,18 has come into contact with the respective stop 37,49.

In a further modification, the link of Figure 8 may use a damping unit 35 (Figure 5) instead of the hydraulic damper 48.

The links described are advantageous because they provide controllably variable damping characteristics. They thus contrast with other types of link having rubber bushes at each end (for connection to the engine and the chassis respectively), the rubber bushes being supported within respective metal tubes which are rigidly interconnected. In such other arrangements, damping is produced only by the stiffness of the rubber bushes and cannot be effectively controlled or varied. Furthermore, the space between the bushes at each end of the link is occupied solely by the rigid metal interconnection and is not performing any useful purposes. In the links described and illustrated, however, the design is such that the part of the link intermediate its two ends is used in a functionally advantageous way to enable the vibration-damping characteristics of the link to be controllably varied.

## Claims

1. A vibration-damping link for interconnecting two relatively movable bodies, comprising two spaced-apart attachment means (12,14) for respective attachment to the two bodies, relatively rigid restraining means (22) for limiting the possible movement apart of the attachment means (12,14), and elastic means (16, 18, 23, 24) to provide damping of relative movement between the attachment means (12,14), characterised by said elastic means (16,18,23,24) extending from one of the two attachment means (12,14) to the other and interconnecting the two attachment means, by a free space (25) defined by the elastic means (16,18,23,24) and between the attachment means (12,14), and by limiting means (26;34;37;37,49;48) in the free space (25) for limiting movement of the attachment means (12,14) towards each other.

2. A link according to claim 1, characterised in that the restraining means comprises a stiff band (22) within the periphery of which are located the attachment means (12,14), theelasticmeans(16,18,23,24), the free space (25) and the limiting means (26;34;37;37,49;48).

3. A link according to claim 1 or 2, characterised in that the limiting means comprises a rigid member (26;37;37,49) fixedly mounted within the free space (25) to provide an abutment positively preventing the attachment means (12,14) from moving towards each other by more than a predetermined extent.

4. A link according to claim 2, characterised in that the limiting means comprises a rigid member (26;37;37,49) attached directly or indirectly to the stiff band (22) and mounted within the free space (25) for positively preventing movement towards each other of the attachment means (12,14) by more than a predetermined extent.

5. A link according to any preceding claim, characterised in that the limiting means comprises hydraulic damping means (34;48).

6. A link according to claim 5, characterised in that the hydraulic damping means comprises a cassette (34) in the form of a unit incorporating two spaced chambers containing hydraulic fluid and means defining a restricted passageway interconnecting the two chambers.

7. A link according to claim 5, characterised in that the hydraulic damping means comprises a piston-cylinder arrangement (48).

8. A link according to any preceding claim, characterised in that the elastic means (16,18,23,24) comprises respective bushes (16,18) of elastomeric material respectively incorporating the two attachment means (12,14), and two spaced-apart walls of elastomeric material (23,24) both extending from one elastomeric bush (16) to the other elastomeric bush (18) and spaced sideways from each other to define the free space (25) between them.

9. A link according to claim 8, characterised in that each of the two elastomeric walls (23,24) is sinuous.

## Patentansprüche

1. Schwingungsdämpfendes Verbindungsglied, um zwei relativ bewegbare Körper untereinander zu verbinden, mit zwei voneinander beabstandeten Befestigungsmitteln (12, 14) für die jeweilige Befestigung an den zwei Körpern, sowie mit einem relativ steifem Dämpfungsmittel (22), um die mögliche einzelne Bewegung der Befestigungsmittel (12, 14) zu begrenzen, und mit elastischen Bauteilen (16, 18, 23, 24), um für eine Dämpfung der Relativbewegung zwischen den Befestigungsmitteln (12, 14) zu sorgen,
**gekennzeichnet, durch**
die elastischen Bauteile (16, 18, 23, 24), die sich von einem der zwei Befestigungsmittel (12, 14) zu dem anderen erstrecken und die zwei Befestigungsmittel untereinander verbinden, sowie durch einen zwischen den Befestigungsmitteln (12, 14) durch die elastischen Bauteile (16, 18, 23, 24) gebildeten Freiraum (25) und durch Begrenzungsmittel (26; 34; 37; 37, 49; 48) in dem Freiraum (25), um die Bewegung der Befestigungsmittel (12, 14) aufeinander zu zu begrenzen.

2. Verbindungsglied nach Anspruch 1, dadurch gekennzeichnet, daß das Dämpfungsmittel einen steifen Gürtel (22) umfaßt, innerhalb dessen Umfang die Befestigungsmittel (12, 14), die elastischen Bauteile (16, 18, 23, 24), der Freiraum (25) und die Begrenzungsmittel (26; 34; 37; 37, 49; 48) angeordnet sind.

3. Verbindungsglied nach Anspruch 1 oder 2, dadurch gekennzeichnet, daß das Begrenzungsmittel ein steifes Bauteil (26; 37; 37, 49) umfaßt, das innerhalb des Freiraums (25) starr angeordnet ist, um ein Wiederlager zu bilden, das zwangsläufig die Befestigungsmittel (12, 14) daran hindert, sich um mehr als ein vorbestimmtes Maß aufeinander zu zu bewegen.

4. Verbindungsglied nach Anspruch 2, dadurch gekennzeichnet, daß das Begrenzungsmittel ein steifes Bauteil (26; 37; 37, 49) umfaßt, das direkt oder indirekt an dem steifen Gürtel (22) befestigt ist und innerhalb des Freiraums (25) angeordnet ist, um zwangsläufig eine Bewegung der Befestigungsmittel (12, 14) aufeinander zu um mehr als ein vorbestimmtes Maß zu verhindern.

5. Verbindungsglied nach einem der vorhergehenden Ansprüche, dadurch gekennzeichnet, daß das Begrenzungsmittel ein hydraulisches Dämpfungsmittel (34; 48) umfaßt.

6. Verbindungsglied nach Anspruch 5, dadurch gekennzeichnet, daß das hydraulische Dämpfungsmittel eine Kassette (34) in der Form einer Einheit umfaßt, in die zwei getrennte Kammern, die Hydraulikflüssigkeit beinhalten, sowie Mittel eingebaut sind, die einen beschränkten Durchgang bilden, der die zwei Kammern untereinander verbindet.

7. Verbindungsglied nach Anspruch 5, dadurch gekennzeichnet, daß das hydraulische Dämpfungsmittel eine Zylinder-Kolben-Anordnung (48) umfaßt.

8. Verbindungsglied nach einem der vorhergehenden Ansprüche, dadurch gekennzeichnet, daß das elastische Bauteil (16, 18, 23, 24) entsprechende Lagerbuchsen (16, 18) aus einem elastomeren Material umfaßt, in die die entsprechenden Befestigungsmittel (12, 14) eingebaut sind, sowie zwei voneinander beabstandete Wände (23, 24) aus einem elastomeren Material umfaßt, die sich beide von einer elastomeren Lagerbuchse (16) bis zur anderen elastomeren Lagerbuchse (18) erstrecken und seitlich voneinander beabstandet sind, um den Freiraum (25) zwischen sich zu bilden.

9. Verbindungsglied nach Anspruch 8, dadurch gekennzeichnet, daß jeder der zwei elastomeren Wände (23, 24) gewellt ausgebildet ist.

## Revendications

1. Liaison d'amortissement des vibrations destinée à interconnecter deux corps mobiles de manière relative, comportant deux moyens de fixation espacés (12, 14) pour une fixation respective sur les deux corps, des moyens de retenue relativement rigides (22) destinés à limiter le mouvement possible à l'écart des moyens de fixation (12, 14), et des moyens élastiques (16, 18, 23, 24) destinés à procurer l'amortissement du mouvement relatif entre les moyens de fixation (12, 14), caractérisée par lesdits moyens élastiques (16, 18, 23, 24) qui s'étendent depuis l'un des deux moyens de fixation (12, 14) jusqu'à l'autre et qui relient les deux moyens de fixation, par un espace libre (25) défini par les moyens élastiques (16, 18, 23, 24) et entre les moyens de fixation (12, 14), et par des moyens de limitation (26; 34; 37; 37, 49; 48) dans l'espace libre (25) destinés à limiter le mouvement des moyens de fixation (12, 14) l'un vers l'autre.

2. Liaison selon la revendication 1, caractérisée en ce que les moyens de retenue comportent une bande rigide (22) a l'intérieur de la périphérie de laquelle se trouvent les moyens de fixation (12, 14), les moyens élastiques (16, 18, 23, 24), l'espace libre (25) et les moyens de limitation (26; 34; 37; 37, 49; 48).

3. Liaison selon la revendication 1 ou 2, caractérisée en ce que les moyens de limitation comportent un élément rigide (26; 37; 37, 49) monté de façon fixe à l'intérieur de l'espace libre (25) afin de procurer une butée empêchant de manière positive les moyens de fixation (12, 14) de se déplacer l'un vers l'autre de plus d'une valeur prédéterminée.

4. Liaison selon la revendication 2, caractérisée en ce que les moyens de limitation comportent un élément rigide (26; 37; 37, 49) fixé directement ou indirectement sur la bande rigide (22) et monté à l'intérieur de l'espace libre (25) afin d'empêcher de manière positive un mouvement l'un vers l'autre des moyens de fixation (12, 14) de plus d'une valeur prédéterminée.

5. Liaison selon l'une quelconque des revendications précédentes, caractérisée en ce que les moyens de limitation comportent des moyens d'amortissement hydrauliques (34; 48).

6. Liaison selon la revendication 5, caractérisée en ce que les moyens d'amortissement hydraulique comportent une cassette (34) sous la forme d'une unité incorporant deux chambres espacées contenant du fluide hydraulique et des moyens définissant un passage étranglé interconnectant les deux chambres.

7. Liaison selon la revendication 5, caractérisée en ce que les moyens d'amortissement hydraulique comportent un agencement à piston-cylindre (48).

8. Liaison selon l'une quelconque des revendications précédentes, caractérisée en ce que les moyens élastiques (16, 18, 23, 24) comportent des douilles (16, 18) respectives en matière élastomère incorporant de manière respective les deux moyens de fixation (12, 14), et deux parois espacées en matière élastomère (23, 24) s'étendant toutes deux depuis une douille en élastomère (16) jusqu'à l'autre douille en élastomère (18) et espacées latéralement l'une de l'autre afin de définir l'espace libre (25) entre elles.

9. Liaison selon la revendication 8, caractérisée en ce que chacune des deux parois en élastomère (23, 24) est sinueuse.
